# EUROPÄISCHE PATENTSCHRIFT

(11) **EP 1 900 589 B1**
(45) Veröffentlichungstag und Bekanntmachung des Hinweises auf die Patenterteilung: **27.06.2012**
(21) Anmeldenummer: 07015941.3
(22) Anmeldetag: 14.08.2007
(51) Int. Cl.: B60W 40/09, B60W 50/14, G08B 21/06

(54) **Fahrerassistenzsystem mit Warnfunktion**
Driver assistance system with warning function
Système d'assistance à la conduite doté d'une fonction d'avertissement

(30) Priorität: 18.09.2006 DE 102006043676
(43) Veröffentlichungstag der Anmeldung: 19.03.2008
(73) Patentinhaber: Robert Bosch GmbH, 70442 Stuttgart (DE); AUDI AKTIENGESELLSCHAFT, 85045 Ingolstadt (DE); Volkswagen AG, 38436 Wolfsburg (DE)
(72) Erfinder: Lucas, Bernhard, 74354 Besigheim (DE); Meister, Dirk, 71696 Möglingen (DE); Ameling, Christian, 38527 Gravenhorst (DE); Mielich, Wolfgang, 85055 Ingolstadt (DE)

(56) Entgegenhaltungen:
- DE-A1- 4 338 244
- DE-A1- 10 326 358
- DE-A1-102005 011 241
- JP-A- 2005 165 423

## Beschreibung

### Stand der Technik

Die Erfindung betrifft ein Fahrerassistenzsystem mit einer Wamfunktion, die den Fahrer auf gefährliche Verkehrssituationen hinweist, mit einer Bewertungseinrichtung zur Bewertung der Fahreraufmerksamkeit und zur Unterdrückung der Warnfunktion bei erkannter Aufmerksamkeit des Fahrers.

Beispiele für solche Fahrerassistenzsysteme sind etwa Spurverlassenswamsysteme oder Kollisionswarnsysteme. Bei einem Spurverlassenswarnsystem wird das Umfeld des Fahrzeugs mit Hilfe einer Videokamera überwacht, und durch elektronische Bildauswertung werden Fahrspurmarkierungen und Fahrbahngrenzen erkannt, so daß automatisch ein Warnsignal ausgegeben werden kann, wenn der Fahrer im Begriff ist, die bisher befahrene Spur zu verlassen, ohne vorher den Blinker gesetzt zu haben. Bei einem Kollisionswarnsystem werden vorausfahrende Fahrzeuge oder andere Hindernisse im Vorfeld des Fahrzeugs mit Hilfe eines Radarsensors und/oder eine monokularen oder binokularen Videosystems geortet, und durch Vergleich der gemessenen Abstände und Relativgeschwindigkeiten der Hindernisse mit der Eigengeschwindigkeit des Fahrzeugs werden Situationen erkannt, in denen es ohne Eingriff des Fahrers zu einer Kollision kommen würde. Durch Ausgabe eines akustischen Warnsignals wird der Fahrer dann auf die Gefahrensituation hingewiesen.

Solche Warnsysteme können einen erheblichen Beitrag zur Verkehrssicherheit leisten, doch leidet ihre Akzeptanz bisher darunter, daß sich die Verkehrssituation mit der verfügbaren Sensorik oft nicht präzise genug bewerten läßt, so daß es relativ häufig zu Fehlwarnungen kommt, die der Fahrer als störend empfindet. Dies kann dazu führen, daß der Fahrer die Warnhinweise nicht mehr beachtet oder das System ganz deaktiviert.

Für Kraftfahrzeuge sind auch Warnsysteme bekannt, die den Fahrer vor einem Sekundenschlaf warnen sollen und die zu diesem Zweck anhand verschiedener Kriterien, beispielsweise anhand der Pulsfrequenz oder der Lidschlagfrequenz des Fahrers die Fahreraufmerksamkeit bewerten. DE 44 00 207 A1 beschreibt ein System dieser Art, bei dem zur Bewertung der Fahreraufmerksamkeit auch die Lenkdynamik des Fahrzeugs ausgewertet wird. Ein aufmerksamer Fahrer führt typischerweise oszillierende Lenkbewegungen mit einer relativ hohen Frequenz aus, um das Fahrzeug in der Spur zu halten. Wenn der Fahrer schläfrig wird, nimmt die Frequenz der Lenkbewegungen deutlich ab, und dies wird bei dem bekannten Warnsystem in Kombination mit anderen Kriterien dazu ausgenutzt, vor einem bevorstehenden Sekundenschlaf zu warnen.

DE 43 38 244 A1 beschreibt ein Fahrerassistenzsystem der eingangs genannten Art, bei dem die Fahreraufmerksamkeit anhand von Daten bestimmt wird, die sich auf Aktivitäten oder Zustände des Fahrers selbst beziehen, etwa die Blickrichtung, die Pulsfrequenz und dergleichen.
Aus DE 103 26 358 A1 ist ein ähnliches Fahrerassistenzsystem bekannt, bei dem dynamische Größen des Fahrzeugs überwacht werden, um eine Fahrertyp-Charakterisierung vorzunehmen, deren Ergebnis dann Einfluß auf das Auslöseverhalten der Warnfunktion hat.

### Vorteile der Erfindung

Durch die Erfindung mit den in Anspruch 1 angegebenen Merkmalen gelingt es, bei einem Fahrerassistenzsystem mit Wamfunktion die Häufigkeit von Fehlwarnungen deutlich zu reduzieren.

Dies wird erfindungsgemäß durch eine Bewertungseinrichtung erreicht, die die Fahreraufmerksamkeit anhand der Fahrdynamik des Fahrzeugs bewertet und ein Aufmerksamkeitssignal ausgibt, wenn der Betrag der Querbeschleunigung des Fahrzeugs einen Schwellenwert überschreitet.

Diese Lösung beruht auf der Feststellung, daß die Fahrdynamik des Fahrzeugs und die darin zum Ausdruck kommenden Aktionen oder Reaktionen des Fahrers wertvolle Aufschlüsse über die Aufmerksamkeit des Fahrers liefern können. Zwar kann ein Fahrer auch dann, wenn er unaufmerksam oder abgelenkt ist, durchaus noch aktiv durch Betätigung des Gaspedals oder Bremspedals oder durch Lenkaktionen in die Fahrdynamik eingreifen, doch zeigt es sich, daß die dabei auftretenden Längs- und Querbeschleunigungen in der Regel innerhalb eines bestimmten Komfortbereiches bleiben. Stärkere Längs- und/oder Querbeschleunigungen, die außerhalb dieses Komfortbereiches liegen, sind dagegen ein deutliches Indiz für eine erhöhte Fahreraufmerksamkeit, insbesondere dann, wenn sie mit einer vom Assistenzsystem erkannten Gefahrensituation korrelieren. Wenn in einer Situation, in der normalerweise ein Warnsignal ausgegeben würde, Fluktuationen der Längs- und/oder Querdynamik auftreten, die außerhalb des Komfortbereiches liegen, kann deshalb geschlossen werden, daß die Aufmeksamkeit des Fahrers hoch ist und er selbst die Gefahr erkannt hat oder erkennen wird, so daß es zweckmäßig ist, den in diesem Fall unnötigen und störenden Warnhinweis zu unterdrücken. Auf diese Weise läßt sich die Häufigkeit von Fehlwarnungen deutlich vermindern und damit die Akzeptanz des Warnsystems steigern.

Wenn der Fahrer beispielsweise aufgrund einer Unaufmerksamkeit im Begriff ist, die bisher befahrene Fahrspur zu verlassen, so wird die dabei auftretende Querbeschleunigung, oder - in einer langgezogenen Kurve - die Abweichung der Querbeschleunigung von einem Mittelwert, unterhalb eines bestimmten Schwellenwertes bleiben, der sich empirisch ermitteln läßt. Wenn der Fahrer dagegen absichtlich einen Spurwechsel vornimmt, so ist dies mit einer deutlich höheren Fluktuation der Querbeschleunigung verbunden und zumeist auch mit einer gleichzeitigen Änderung der Längsbeschleunigung. So ist es möglich, einen absichtlichen Spurwechsel auch dann zu erkennen und die Spurverlassenswarnung zu unterdrücken, wenn der Fahrer vergessen hat, den Blinker zu setzen.

Vorteilhafte Ausgestaltungen und Weiterbildungen der Erfindung ergeben sich aus den Unteransprüchen.

In einer zweckmäßigen Ausführungsform werden zur Bewertung der Fahreraufmerksamkeit auch die Längsbeschleunigungen des Fahrzeugs gemessen und ausgewertet. Alternativ oder ergänzend können auch Parameter ausgewertet werden, die direkter auf die Aktionen des Fahrers hinweisen, etwa die Geschwindigkeit der Lenkradbewegung oder der Bewegung des Gaspedals, die Betätigung des Bremspedals, das Setzen des Blinkers und dergleichen.

So kann z. B. in einer Situation, in der der Radarsensor eine deutliche Verringerung der Geschwindigkeit des vorausfahrenden Fahrzeugs feststellt, aus einer etwa gleichzeitig auftretenden deutlichen Verzögerung des eigenen Fahrzeugs geschlossen werden, daß der Fahrer selbst die Gefahrensituation erkannt und durch Loslassen des Gaspedals darauf reagiert hat, so daß der an sich gebotene Warnhinweis entfallen kann.

Um eine Verfälschung der gemessenen Beschleunigungen durch Fahrbahnunebenheiten oder andere äußere Einflüsse zu vermeiden, ist es zweckmäßig, die Beschleunigungen als mittlere Beschleunigung pro Wegstrecke oder als mittlere Beschleunigung pro Zeitinterval zu bestimmen.

Im einfachsten Fall wird die Fahreraufmerksamkeit als hoch bewertet, wenn die gemessene Querbeschleunigung bzw. die gemessene positive oder negative Längsbeschleunigung einen geeignet gewählten Schwellenwert überschreitet. Gemäß einer zweckmäßigen Weiterbildung sind die Schwellenwerte von der aktuell gefahrenen Geschwindigkeit abhängig. Dadurch wird dem Umstand Rechnung getragen, daß die Beschleunigungen, die noch innerhalb des Komfortbereiches liegen und vom Fahrer auch bei geringer Aufmerksamkeit gleichsam "mechanisch" veranlaßt werden, bei niedriger Geschwindigkeit größer sein können als bei höherer Geschwindigkeit. Schließlich ist es auch möglich, eine Interdependenz zwischen Längs- und Querbeschleunigung vorzusehen, etwa in der Form, daß bei höherer Querbeschleunigung der Schwellenwert für die Längsgeschwindigkeit herabgesetzt wird und umgekehrt.

### Zeichnung

Ein Ausführungsbeispiel der Erfindung ist in den Zeichnungen dargestellt und in der nachfolgenden Beschreibung näher erläutert.

Es zeigen:
- Figur 1: ein Blockdiagramm eines erfindungsgemäßen Fahrerassistenzsystems;
- Figur 2: ein Diagramm zur Erläuterung eines Verfahrens zur Bewertung der Fahreraufmerksamkeit; und
- Figur 3: ein Flußdiagramm zur Erläuterung der Arbeitsweise des Fahrerassistenzsystems.

### Beschreibung des Ausführungsbeispiels

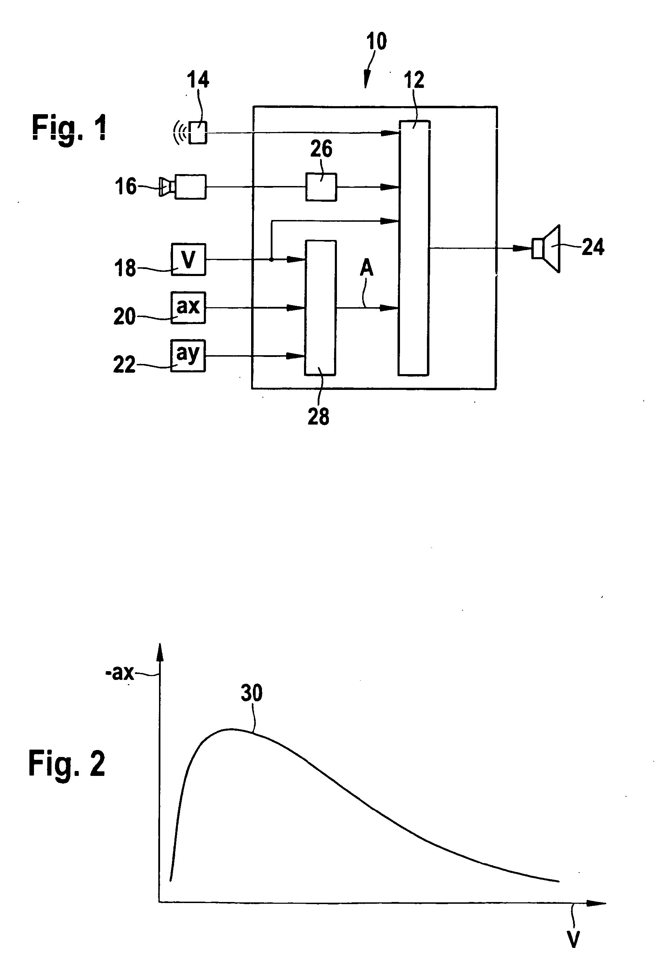

Kernstück des in Figur 1 gezeigten Fahrerassistenzsystems ist ein elektronisches Datenverarbeitungssystem 10, in dem eine Warnfunktion 12 implementiert ist. Das Datenverarbeitungssystem 10 verarbeitet Signale von verschiedenen Umwelt- und Fahrzeugsensoren. Als Umweltsensoren sind im gezeigten Beispiel ein Radarsensor 14 und ein Videosystem 16 vorgesehen. Die Fahrzeugsensoren dienen zur Erfassung von Betriebsparametern und dynamischen Daten des Fahrzeugs, das mit dem Fahrerassistenzsystem ausgerüstet ist, und umfassen insbesondere einen Geschwindigkeitssensor 18 zur Messung der Fahrgeschwindigkeit V des eigenen Fahrzeugs, einen Längsbeschleunigungssensor 20 zur Messung der Längsbeschleunigung ax und einen Querbeschleunigungssensor 22 zur Messung der Querbeschleunigung ay. Ergänzend können auch noch weitere nicht gezeigte Sensoren angeschlossen sein, beispielsweise ein Pedalwegsensor zur Messung des Gaspedalweges, ein Bremspedalsensor zur Messung der Bremsbetätigungskraft, ein Lenkwinkelsensor, ein Blinkschalter-Fühler zur Erfassung des Zustands des Fahrtrichtungsanzeigers und dergleichen.

Der Radarsensor 14 ist so im Fahrzeug eingebaut, daß er das Vorfeld des Fahrzeugs überwachen kann und dient zur Ortung von Radarzielen, die als potentielle Hindernisse in Betracht zu ziehen sind. Insbesondere mißt der Radarsensor die Abstände, Relativgeschwindigkeiten und Azimutwinkel der georteten Objekte. Die Warnfunktion 12 enthält einen Algorithmus, der anhand der Daten des Radarsensors 14 erkennt, ob sich Hindernisse im voraussichtlichen Fahrkorridor des eigenen Fahrzeugs befinden, und der anhand der gemessenen Abstände und Relativgeschwindigkeiten und anhand der Fahrgeschwindigkeit V die Verzögerung (negative Längsbeschleunigung) des eigenen Fahrzeugs berechnet, die notwendig wäre, um eine Kollision mit dem Hindernis zu vermeiden. Wenn diese Verzögerung einen bestimmten Schwellenwert überschreitet, der kleiner ist als ein plausibler Wert für das tatsächliche Verzögerungsvermögen des eigenen Fahrzeugs, so veranlaßt die Warnfunktion 12 über eine Mensch/Maschine-Schnittstelle 24 die Ausgabe eines Kollisionswarnsignals, um den Fahrer auf die drohende Kollisionsgefahr hinzuweisen. Zur Bestimmung des voraussichtlichen Fahrkorridors können auf Kurvenstrecken beispielsweise die Daten eines nicht gezeigten Gierratensensors herangezogen werden. Im gezeigten Beispiel ist außerdem an das Videosystem 16 ein elektronisches Bildverarbeitungssystem 26 angeschlossen, das Fahrbahnmarkierungen und Fahrbahngrenzen im Videobild erkennt und somit in der Lage ist, den Verlauf der Fahrbahn und damit des voraussichtlichen Fahrkorridors zu bestimmen. Ergänzend können die Ergebnisse des Bildverarbeitungssystems 26 auch dazu herangezogen werden, die vom Radarsensor 14 georteten Objekte näher zu klassifizieren und hinsichtlich ihrer Relevanz zu bewerten.

Weiterhin ist anhand der Daten des Bildverarbeitungssystems 26 zu erkennen, ob sich das eigene Fahrzeug der linken oder rechten Grenze der derzeit befahrenen Fahrspur annähert, und durch einen in der Warnfunktion 12 implementierten Algorithmus wird dann über die Mensch/Maschine-Schnittstelle 24 eine Spurverlassenswarnung ausgegeben, beispielsweise in der Form eines haptischen Signals (Vibrieren des Lenkrads oder dergleichen).

Die oben beschriebenen Warnfunktionen entsprechen als solche dem bekannten Stand der Technik. Die Kriterien für die Ausgabe der verschiedenen Warnsignale sollten jeweils so beschaffen sein, daß der Fahrer einerseits eine rechtzeitige Warnung erhält, wenn eine tatsächliche Gefahr droht, andererseits jedoch der Fahrer nicht durch unnötige Warnungen irritiert und belästigt wird. Dieses Ziel läßt sich mit der heute verfügbaren Sensorik nur näherungsweise erreichen, so daß gelegentliche Fehlwarnungen nicht ausgechlossen sind. Aus diesem Grund weist das hier beschriebene Datenverarbeitungssystem 10 eine Bewertungseinrichtung 28 auf, das anhand der aus den Daten der Fahrzeugsensoren abgeleiteten dynamischen Daten des Fahrzeugs den Aufmerksamkeitszustand des Fahrers bewertet und bei hoher Fahreraufmerksamkeit die Ausgabe des Warnsignals unterdrückt. Der Fahrer erhält somit nur dann ein Warnsignal, wenn seine Aufmerksamkeit als niedrig bewertet wird, während bei hoher Fahreraufmerksamkeit davon ausgegangen wird, daß der Fahrer selbst die Gefahrensituation erkennt und angemessen reagiert.

Maßgebliche Kriterien für die Bewertung der Fahreraufmerksamkeit sind die Längsbeschleunigung ax und die Querbeschleunigung ay des eigenen Fahrzeugs. Als einfaches Beispiel kann angenommen werden, daß die Fahreraufmerksamkeit immer dann als hoch bewertet wird und ein entsprechendes Aufmerksamkeitssignal A ausgegeben wird, wenn der Betrag der Längsbeschleunigung ax oberhalb eines bestimmten Schwellenwertes von beispielsweise 0,4 g liegt oder der Betrag der Querbeschleunigung ay oberhalb eines bestimmten Schwellenwertes von beispielsweise 0,3g liegt. Diese Schwellenwerte grenzen einen Komfortbereich ein, den der Fahrer nicht verlassen wird, wenn die Verkehrssituation "entspannt" ist und keine energischeren Manöver erfordert oder wenn der Fahrer unaufmerksam oder durch andere Tätigkeiten (Bedienung des Navigationssystems, Telefonieren, etc.) abgelenkt ist und deshalb nur mechanisch oder unbewußt auf das Verkehrsgeschehen reagiert, wobei insbesondere auch die Gefahr besteht, daß der Fahrer drohende Gefahren nicht oder nicht rechtzeitig erkennt.

Solange diese Schwellenwerte nicht überschritten werden, wird deshalb die Aufmerksamkeit des Fahrers als niedrig eingestuft, und es wird ein Warnsignal ausgegeben, wenn anhand der Daten des Radarsensors 14 und/oder des Videosystems 16 eine Gefahrensituation erkannt wird. Wenn dagegen mindestens einer der gemessenen Beschleunigungswerte oberhalb des betreffenden Schwellenwertes liegt, kann davon ausgegangen werden, daß der Fahrer schon allein durch die größeren Trägheitskräfte, denen er in dieser Situation ausgesetzt ist, zu einer erhöhten Aufmerksamkeit veranlaßt wird. Häufig wird es auch so sein, daß die hohen Beschleunigungswerte nur deshalb erreicht werden, weil der Fahrer aktiv auf die aktuelle Verkehrssituation reagiert und beispielsweise eine Verzögerung des Fahrzeugs oder ein Ausweich- oder Überholmanöver einleitet, um die Situation zu beherrschen. In diesen Situationen gibt deshalb die Bewertungseinrichtung 28 das Aufmerksamkeitssignal A aus, wodurch die Warnfunktion 12 veranlaßt wird, auch im Fall einer erkannten Gefahrensituation die Ausgabe des Warnsignals zu unterdrücken.

Im gezeigten Beispiel sind die Schwellenwerte für die Längsbeschleunigung ax und die Querbeschleunigung ay nicht statisch, sondern in Abhängigkeit von der Fahrgeschwindigkeit V variabel. Damit wird dem Umstand Rechnung getragen, daß der oben beschriebene Komfortbereich von der Fahrgeschwindigkeit V abhängig ist. Bei niedriger Fahrgeschwindigkeit wird der Fahrer eher geneigt sein, größere Längs- oder Querbeschleunigungen zu tolerieren, ohne daß dies seine besondere Aufmerksamkeit hervorruft, während bei höherer Fahrgeschwindigkeit das Aufmerksamkeitsniveau des Fahrers generell höher sein wird und er deshalb empfindlicher auf Längs- und Querbeschleunigungen reagieren wird.

Als Beispiel zeigt Figur 2 eine Kurve 30, die die Abhängigkeit des Schwellenwertes für die Längsbeschleunigung ax (genauer: die negative Längsbeschleunigung -ax) von der Fahrgeschwindigkeit V angibt. Der Schwellenwert für die positive Längsbeschleunigung kann durch eine andere, aber qualitativ ähnliche Kurve beschrieben werden. Eine weiter vergleichbare Kurve beschreibt die Abhängigkeit des Schwellenwertes für die Querbeschleunigung ay von der Fahrgeschwindigkeit. Der genaue Verlauf dieser Kurven kann vorab empirisch bestimmt und in der Bewertungseinrichtung 28 gespeichert werden.

Gemäß einer Weiterbildung ist es auch denkbar, daß die Bewertungseinrichtung 28 einen Lernalgorithmus enthält, durch den die Schwellenwertkurven individuell an die Gewohnheiten des Fahrers angepaßt werden.

Vor dem Schwellenwertvergleich werden die gemessenen Beschleunigungswerte ax und ay vorzugsweise mit einer geeigneten Zeitkonstanten gefiltert, um kurzfristige Fluktuationen zu eliminieren, wie sie etwa durch Bodenunebenheiten, Windböen und dergleichen verursacht werden können. Für die Querbeschleunigung kann das Filter auch so beschaffen sein, daß auch langperiodische Änderungen der Querbeschleunigung, wie sie etwa beim Durchfahren langgezogener Kurven auftreten, in einem gewissen Ausmaß ausgefiltert werden.

Wenn der Fahrer aufgrund verminderter Aufmerksamkeit oder aufgrund eines Sekundenschlafes von der Fahrspur abkommt und das Videosystem 16 erkennt, daß er im Begriff ist, die Fahrspur zu verlassen, wird die in der oben beschriebenen Weise gefilterte Querbeschleunigung ay im allgemeinen unterhalb des Schwellenwertes bleiben, und das Aufmerksamkeitssignal A wird nicht ausgegeben, so daß durch die Wamfunktion 12 die Ausgabe eines Warnsignals veranlaßt wird. Wenn der Fahrer dagegen aktiv einen Spurwechsel vornimmt, wird die gefilterte Querbeschleunigung ay den zugehörigen, geschwindigkeitsabhängigen Schwellenwert überschreiten, und durch die Ausgabe des Aufmerksamkeitssignals A wird die in diesem Falle unangebrachte Warnung unterdrückt, und zwar auch dann, wenn der Fahrer vergessen hat, seine Spurwechselabsicht durch Setzen des Blinkers anzuzeigen. Insbesondere wird die Ausgabe des Warnsignals auch dann unterdrückt, wenn der Fahrer in einer Notsituation relativ plötzlich ein Ausweichmanöver vornehmen muß. In dieser Situation wäre die Ausgabe eines Warnsignals eher schädlich, da sie den Fahrer ablenkt oder irritiert.

Bei bekannten Fahrerassistenzsytemen ist die Warnfunktion 12 häufig so ausgelegt, daß anhand der Daten der Umweltsensoren quantitativ eine gewisse Kollisionswahrscheinlichkeit oder ein Gefahrenpotential berechnet wird und daß das Warnsignal ausgegeben wird, wenn das Gefahrenpotential einen bestimmten Schwellenwert überschreitet. Statt die Ausgabe des Warnsignals ganz zu unterdrücken ist es dann auch möglich, daß bei vorhandenem Aufmerksamkeitssignal A lediglich die Auslöseschwelle für die Ausgabe des Warnsignals erhöht wird, so daß bei weiter zunehmendem Gefahrenpotential letztlich doch das Warnsignal ausgegeben wird, wenn der Fahrer trotz anscheinend vorhandener Aufmerksamkeit nicht angemessen auf die Situation reagiert.

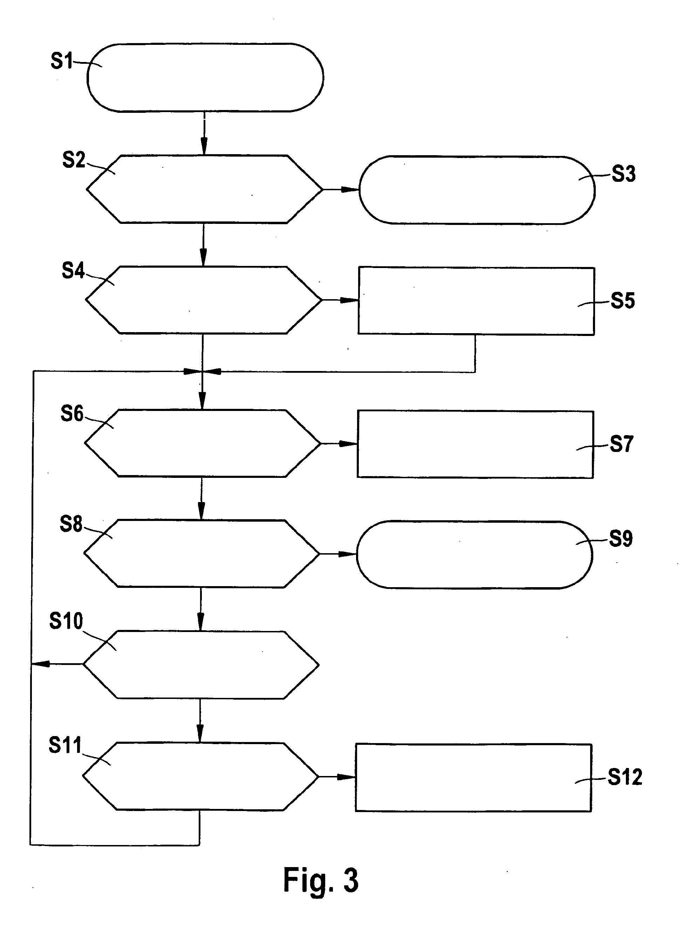

Figur 3 illustriert anhand eines Flußdiagramms die Arbeitsweise eines in dieser Weise ausgestalteten Fahrerassistenzsystems. Als Beispiel ist hier nur die Kollisionswarnfunktion illustriert.

Mit Schritt S 1 beginnt eine Prüfroutine, die vom Datenverarbeitungssystem 10 zyklisch ausgeführt wird. In Schritt S2 wird anhand der Daten der Umweltsensoren geprüft, ob eine Kollisionsgefahr besteht, die bei geringer Fahreraufmerksamkeit einen Warnhinweis erfordern würde. Wenn dies nicht der Fall ist, wird die Routine mit Schritt S3 beendet, und mit Schritt S 1 beginnt ein neuer Programmzyklus.

Wenn in Schritt S2 eine Kollisionsgefahr festgestellt wird, so wird in Schritt S4 geprüft, ob die Bewertungseinrichtung 28 das Aufmerksamkeitssignal A ausgibt. Vorzugsweise nimmt das Aufmerksamkeitssignal A, nachdem einer der Schwellenwerte für die Beschleunigung überschritten wurde, erst mit einer gewissen Hysterese oder zeitlichen Verzögerung wieder ab, so daß ein gewisses Erinnerungsvermögen an die Vorgeschichte implementiert ist.

Wenn in Schritt S4 festgestellt wird, daß das Aufmerksamkeitssignal A nicht anliegt, so wird in Schritt S5 eine geeignet gewählte Wartezeit festgelegt und ein Zeitgeber gestartet. Die Länge der Wartezeit ist davon abhängig, wieviel Zeit dem Fahrer noch zur Verfügung steht, um die Kollision abzuwenden. Nach dem Starten des Zeitgebers wird in Schritt S6 erneut die Kollisionsgefahr geprüft. Dieser Schritt S6 wird auch direkt, unter Auslassung von Schritt S5 erreicht, wenn in Schritt S4 das Aufmerksamkeitssignal A vorlag. In Schritt S6 wird geprüft, ob eine akute oder gesteigerte Kollisionsgefahr vorliegt, d.h., ob die Kollisionswahrscheinlichkeit oberhalb eines höheren Schwellenwertes liegt als in Schritt S2. In dem Fall wird in Schritt S7 das Warnsignal ausgegeben.

Wenn in Schritt S6 keine akute (gesteigerte) Kollisionsgefahr vorliegt, wird in Schritt S8 geprüft, ob die "normale Kollisionsgefahr (wie in Schritt S2) noch besteht. Ist die Kollisionsgefahr inzischen beseitigt, wird die Routine mit Schritt S9 beendet, d. h., die in Schritt S2 erkannte Kollisionsgefahr führt nicht zur Ausgabe eines Warnsignals.

Andernfalls wird in Schritt S10 erneut geprüft, ob das Aufmerksamkeitssignal A anliegt. Ist dies der Fall, erfolgt ein Rücksprung zur Schritt S6, und die Schritte S6, S8 und S10 werden in einer Schleife solange wiederholt, bis die Kollisionsgefahr entweder das akute Stadium erreicht hat oder beseitigt ist.

Wenn sich das Aufmerksamkeitssignal A in Schritt S4 nicht anlag und auch in Schritt S10 noch nicht anliegt, wird in Schritt S11 geprüft, ob die in Schritt S5 bestimmte Wartezeit abgelaufen ist, erfolgt ein Rücksprungzu Schritt S6. Sobald die Wartezeit abgelaufen ist, wird in Schritt S12 das Warnsignal ausgegeben.

Die Schleife mit den Schritten S6, S8, S10 und S11 stellt sicher, daß das Warnsignal auch dann unterdrückt werden kann, wenn in dem Augenblick, in dem die Kollisionsgefahr erkannt wird (Schritt S2) noch keine erhöhte Fahreraufmerksamkeit zu verzeichnen ist, der Fahrer aber kurz danach die Gefahr selbst erkennt und dann entsprechend reagiert, was zur Ausgabe des Aufmerksamkeitssignals A führt. Die in Schritt S5 bestimmte Wartezeit, die dem Fahrer noch bis zu einer Reaktion gelassen wird, ist dabei je nach Verkehrssituation so begrenzt, daß die Ausgabe des Warnsignals in Schritt S12 noch so rechtzeitig erfolgt, daß die Kollision abgewendet werden kann.

Das in Figur 1 gezeigte Fahrerassistenzsystem 10 kann auch Teil eines sogenannten ACC-Systems (Adaptive Cruise Control) sein, das in der Lage ist, die Geschwindigkeit des Fahrzeugs durch Eingriff in das Antriebs- und/oder Bremssystem auf eine vom Fahrer gewählte Wunschgeschwindigkeit zu regeln oder, wenn durch den Radarsensor 14 ein vorausfahrendes Fahrzeug geortet wird, den Abstand zu diesem vorausfahrenden Fahrzeug, dem sogenannten Zielobjekt, zu regeln. Während die Warnfunktion 12 auch in Kombination mit den Regelfuntionen des ACC-Systems aktiv sein kann, setzt die Funktion der Bewertungseinrichtung 28 voraus, daß der Fahrer aktiv in das geschehen eingreift. Es ist deshalb zweckmäßig, daß die Bewertungseinrichtung 28 automatisch aktiviert wird, sobald der Fahrer die ACC-Funktion deaktiviert, so daß, wenn der Fahrer selbst die Kontrolle übernimmt, die Warnfunkion 12 einschließlich der Funktion der Bewertungseinrichtung 28 zur Verfügung steht.

Das ACC-System ist normalerweise so konfiguriert, daß es sich selbst abschaltet, sobald der Fahrer das Bremspedal betätigt. Bei Betätigung des Gaspedals durch den Fahrer bleibt die ACC-Funktion dagegen normalerweise in Betrieb. Zu einer Selbstabschaltung dieser Funktion kommt es nur dann, wenn das Zielobjekt verlorengeht oder der nötige Sicherheitsabstand zum Zielobjekt im Rahmen der Abstandsregelung nicht mehr eingehalten werden kann. Diese Selbstabschaltung ist dann von der Ausgabe eines akustischen Warnsignals begleitet.

Die Bewertungseinrichtung 28 kann wahlweise auch dazu benutzt werden, dieses Warnsignal bei Selbstabschaltung des ACC-Systems zu unterdrücken, wenn der Fahrer schon vor der Selbstabschaltung das Gaspedal betätigt, um die Regelung zu übersteuern, und dadurch eine erhöhte Aufmerksamkeit sowie den Willen zu erkennen gibt, selbst die Kontrolle zu übernehmen.

## Patentansprüche

1. Fahrerassistenzsystem mit einer Warnfunktion (12), die den Fahrer auf gefährliche Verkehrssituationen hinweist, mit einer Bewertungseinrichtung (28) zur Bewertung der Fahreraufmerksamkeit (A) und zur Unterdrückung der Warnfunktion (12) bei erkannter Aufmerksamkeit des Fahrers, **dadurch gekennzeichnet, daß** die Bewertungseinrichtung (28) dazu ausgebildet ist, die Fahreraufmerksamkeit anhand der Fahrdynamik (ax, ay) des Fahrzeugs zu bewerten und ein Aufmerksamkeitssignal (A) auszugeben, wenn der Betrag der Querbeschleunigung (ay) des Fahrzeugs einen Schwellenwert überschreitet.

2. Fahrerassistenzsystem nach Anspruch 1, **dadurch gekennzeichnet, daß** die Bewertungseinrichtung (28) ein Aufmerksamkeitssignal (A) ausgibt, wenn die Längsbeschleunigung (ax) des Fahrzeugs einen negativen Schwellenwert (30) unterschreitet.

3. Fahrerassistenzsystem nach Anspruch 1 oder 2, **dadurch gekennzeichnet, daß** die Bewertungseinrichtung (28) ein Aufmerksamkeitssignal (A) ausgibt, wenn die Längsbeschleunigung (ax) einen positiven Schwellenwert überschreitet.

4. Fahrerassistenzsystem nach einem der Ansprüche 1 bis 3, **dadurch gekennzeichnet, daß** die Bewertungseinrichtung (28) dazu ausgebildet ist, wenigstens einen der genannten Schwellenwerte situationsabhängig zu variieren.

5. Fahrerassistenzsystem nach Anspruch 4, **dadurch gekennzeichnet, daß** mindestens einer der Schwellenwerte von der Fahrgeschwindigkeit (V) abhängig ist.

6. Fahrerassistenzsystem nach einem der Ansprüche 1 bis 5, **dadurch gekennzeichnet, daß** die Bewertungseinrichtung (28) dazu ausgebildet ist, die Längsbeschleunigung (ax) und/oder die Querbeschleunigung (ay) vor dem Schwellenwertvergleich einer zeitlichen Filterung zu unterziehen.

7. Fahrerassistenzsystem nach einem der vorstehenden Ansprüche, **gekennzeichnet durch** einen Radarsensor (14) und/oder ein Videosystem (16) zur Erkennung von Gefahrensituationen.

8. Fahrerassistenzsystem nach Anspruch 7, **dadurch gekennzeichnet, daß** die Warnfunktion (12) dazu ausgebildet ist, anhand der Daten des Radarsensors (14) und/oder des Videosystems (16) ein Gefahrenpotential quantitativ zu berechnen und ein Warnsignal auszugeben, wenn das Gefahrenpotential einen bestimmten Schwellenwert übersteigt, und daß die Warnfunktion weiterhin dazu ausgebildet ist, den Schwellenwert für die Ausgabe des Warnsignals bei erkannter Aufmerksamkeit des Fahrers zu erhöhen.

## Claims

1. Driver assistance system with a warning function (12) which alerts the driver to dangerous traffic situations, having an evaluation device (28) for evaluating the driver's attentiveness (A) and for suppressing the warning function (12) when it is detected that the driver is attentive, **characterized in that** the evaluation device (28) is designed to evaluate the driver's attentiveness on the basis of the driving dynamics (ax, ay) of the vehicle and to output an attentiveness signal (A) if the absolute value of the lateral acceleration (ay) of the vehicle exceeds a threshold value.

2. Driver assistance system according to Claim 1, **characterized in that** the evaluation device (28) outputs an attentiveness signal (A) if the longitudinal acceleration (ax) of the vehicle drops below a negative threshold value (30).

3. Driver assistance system according to Claim 1 or 2, **characterized in that** the evaluation device (28) outputs an attentiveness signal (A) if the longitudinal acceleration (ax) exceeds a positive threshold value.

4. Driver assistance system according to one of Claims 1 to 3, **characterized in that** the evaluation device (28) is designed to vary at least one of the specified threshold values in a situation-dependent fashion.

5. Driver assistance system according to Claim 4, **characterized in that** at least one of the threshold values is dependent on the velocity (V).

6. Driver assistance system according to one of Claims 1 to 5, **characterized in that** the evaluation device (28) is designed to subject the longitudinal acceleration (ax) and/or the lateral acceleration (ay) to chronological filtering before the threshold value comparison.

7. Driver assistance system according to one of the preceding claims, **characterized by** a radar sensor (14) and/or a video system (16) for detecting hazardous situations.

8. Driver assistance system according to Claim 7, **characterized in that** the warning function (12) is designed to calculate quantitatively a hazard potential on the basis of the data of the radar sensor (14) and/or of the video system (16) and to output a warning signal if the hazard potential exceeds a specific threshold value, and that the warning function is also designed to increase the threshold value for outputting the warning signal when it is detected that the driver is attentive.

## Revendications

1. Système d'assistance au conducteur doté d'une fonction d'avertissement (12) qui indique au conducteur des situations dangereuses de la circulation, le système présentant un dispositif d'évaluation (28) qui évalue l'attention (A) du conducteur et qui bloque la fonction d'avertissement (12) lorsqu'il détecte que le conducteur est attentif,
**caractérisé en ce que**
le dispositif d'évaluation (28) est configuré pour évaluer l'attention du conducteur à l'aide de la dynamique de roulage (ax, ay) du véhicule et pour délivrer un signal d'attention (A) lorsque le niveau d'accélération transversale (ay) du véhicule dépasse une valeur de seuil.

2. Système d'assistance au conducteur selon la revendication 1, **caractérisé en ce que** le dispositif d'évaluation (28) délivre un signal d'attention (A) lorsque l'accélération longitudinale (ax) du véhicule n'atteint pas une valeur de seuil négative (30).

3. Système d'assistance au conducteur selon la revendication 1 ou 2, **caractérisé en ce que** le dispositif d'évaluation (28) délivre un signal d'inattention (A) lorsque l'accélération longitudinale (ax) dépasse une valeur de seuil positive.

4. Système d'assistance au conducteur selon l'une des revendications 1 à 3, **caractérisé en ce que** le dispositif d'évaluation (28) est configuré pour modifier au moins l'une desdites valeurs de seuil en fonction de la situation.

5. Système d'assistance au conducteur selon la revendication 4, **caractérisé en ce qu'**au moins l'une des valeurs de seuil dépend de la vitesse de roulage (V).

6. Système d'assistance au conducteur selon l'une des revendications 1 à 5, **caractérisé en ce que** le dispositif d'évaluation (28) est configuré pour faire subir à l'accélération longitudinale (ax) et/ou à l'accélération transversale (ay) un filtrage temporel avant la comparaison à la valeur de seuil.

7. Système d'assistance au conducteur selon l'une des revendications précédentes, **caractérisé par** un détecteur radar (14) et/ou un système vidéo (16) qui détectent les situations dangereuses.

8. Système d'assistance au conducteur selon la revendication 7, **caractérisé en ce que** la fonction d'avertissement (12) est configurée pour calculer quantitativement un potentiel de danger à l'aide des données du détecteur radar (14) et/ou du système vidéo (16) et pour délivrer un signal d'avertissement si le potentiel de danger dépasse une valeur de seuil définie et **en ce que** la fonction d'avertissement est en outre configurée pour rehausser la valeur de seuil pour l'émission du signal d'avertissement lorsqu'elle a détecté que le conducteur est attentif.
